# EUROPEAN PATENT APPLICATION

(11) **EP 4 574 242 A1**
(43) Date of publication of application: **25.06.2025**
(21) Application number: 23307347.7
(22) Date of filing: 22.12.2023
(51) Int. Cl.: B01D 53/14, F23J 15/00

(54) **CARBON CAPTURE SYSTEM WITH A BLOWERLESS CONFIGURATION**

(71) Applicant: Technip Energies France, 92741 Nanterre Cedex (FR)
(72) Inventor: SCHENK, Myrian, 92741 Nanterre Cedex (FR); STARR, James, 92741 Nanterre Cedex (FR); STONE, Andrew, 92741 Nanterre Cedex (FR)
(74) Representative: Edson, Russell Gregory

(57) **Abstract**

A carbon capture system can include an absorber that can receive flue gas from a power plant and apply an amine solution to the flue gas for removing carbon dioxide from the flue gas. In some examples, the carbon capture system can exclude a blower from a flow path for the flue gas between the power plant and the absorber.

## Description

### Technical Field

The present disclosure relates generally to carbon capture systems for capturing carbon dioxide in post-combustion flue gas downstream of industrial processes. More specifically, but not by way of limitation, this disclosure relates to a carbon capture system that lacks a blower in a flow path for the flue gas to a carbon capture system, which could be an absorption based or adsorption based technology, where the carbon capture system is for removing carbon dioxide from the flue gas. The carbon capture system may be applied to new, purpose-built facilities or retrofitted to existing facilities.

### Background

Power plants, refineries, and other industrial facilities often generate carbon dioxide (CO₂) emissions as a byproduct of their primary industrial processes. If the CO₂ emissions are released into the environment, it can have negative environmental consequences. To help mitigate these environmental impacts, carbon capture techniques have been developed. Carbon capture techniques can be used to capture or "scrub" CO₂ from the byproduct emissions. Once captured, the CO₂ can then be stored or used in other processes.

In the context of power generation, power plants burn fossil fuels (e.g., gas or coal) to drive a turbine to generate electricity. Burning fossil fuels can generate flue gas, which is a combustion exhaust gas that may include CO₂ emissions as a byproduct. There are two main categories of carbon capture techniques used to reduce such CO₂ in flue gas: pre-combustion techniques and post-combustion techniques. Pre-combustion techniques trap CO₂ before the fossil fuels are burned, which can reduce the amount of downstream CO₂ in the flue gas. Post-combustion techniques trap CO₂ in the flue gas after the fossil fuels are burned.

Post-combustion techniques can be implemented by a carbon capture plant. A carbon capture plant includes a specialized arrangement of equipment that is designed to capture CO₂ in the flue gas output by an emitter, such as a power plant or another industrial facility. Examples of such specialized equipment can include blowers, pumps, coolers, condensers, and filters. The carbon capture plant is attached to the emitter for receiving and scrubbing the flue gas.

### Summary

One example of the present disclosure includes a carbon capture system comprising an absorber. The absorber receives flue gas from a power plant and applies an amine solution to the flue gas for removing carbon dioxide from the flue gas. The carbon capture system excludes a blower from a flow path for the flue gas between the power plant and the absorber.

One or more embodiments include the carbon capture system of the previous paragraph, wherein the flow path extends from a turbine of the power plant to an inlet of the absorber.

One or more embodiments include the carbon capture system of the previous paragraph, wherein the turbine is has a discharge pressure, the discharge pressure being usable to increase a pressure of the flue gas to at least a predefined pressure level associated with the absorber.

One or more embodiments include the carbon capture system of any previous paragraph, wherein the power plant comprises a combustor that generates the flue gas by combusting a fossil fuel; the turbine coupled to the combustor, wherein the turbine rotates a shaft in response to the flue gas; and a generator coupled to the turbine, wherein the generator generates electric power in response to a rotation of the shaft of the turbine.

One or more embodiments include the carbon capture system of any previous paragraph, wherein the flow path is defined by one or more conduits between a combustor associated with the turbine and the inlet of the absorber.

One or more embodiments include the carbon capture system of any previous paragraph, wherein the turbine has a discharge pressure selected to offset a pressure drop resulting from an exclusion of the blower from the flow path.

One or more embodiments include the carbon capture system of the previous paragraph, wherein the discharge pressure is a minimum pressure level associated with using the absorber.

One or more embodiments include the carbon capture system of any previous paragraph, wherein the power plant comprises one or more processors and one or more memories. The one or more memories include instructions that are executable by the one or more processors for causing the one or more processors to perform operations. The operations can include receiving a pressure measurement from a pressure sensor positioned in the flow path for the flue gas from the power plant to the carbon capture system, the pressure measurement indicating a pressure level of the flue gas. The operations can include determining whether the pressure level of the flue gas meets or exceeds a predefined threshold. The operations can include, in response to determining that the pressure level of the flue gas is below the predefined threshold, transmitting a control signal to a discharge pressure regulator of the power plant. The control signal causes the discharge pressure regulator to increase a discharge pressure of the turbine of the power plant by an amount that increases the pressure level of the flue gas to at least the predefined threshold.

One or more embodiments include the carbon capture system of the previous paragraph, wherein the predefined threshold is a minimum pressure level associated with using the absorber.

Another example of the present disclosure includes a method comprising creating a flow path for flue gas emitted by a power plant, the flow path extending from the power plant to an absorber of a carbon capture system, wherein the absorber receives the flue gas and applies an amine solution to the flue gas for removing carbon dioxide from the flue gas, and wherein the flow path excludes a blower between the power plant and the absorber. The method also includes operating a turbine of the power plant, the turbine having a discharge pressure selected to offset a pressure drop resulting from an exclusion of the blower from the flow path.

One or more embodiments include the method of the previous paragraph, wherein the flow path extends from a combustor of the power plant to an inlet of the absorber.

One or more embodiments include the method of any previous paragraph, further comprising increasing the discharge pressure of the turbine by 50-70 kilo-pounds-per-inch (KPI) to offset the pressure drop.

One or more embodiments include the method of any previous paragraph, wherein the power plant comprises: a combustor that generates the flue gas by combusting a fossil fuel; the turbine coupled to the combustor, wherein the turbine rotates a shaft in response to the flue gas; and a generator coupled to the turbine, wherein the generator generates electric power in response to a rotation of the shaft of the turbine.

One or more embodiments include the method of any previous paragraph, wherein the flow path is defined by one or more conduits between a combustor associated with the turbine and an inlet of the absorber.

One or more embodiments include the method of any previous paragraph, wherein the discharge pressure is a minimum pressure level associated with using the absorber.

One or more embodiments include the method of any previous paragraph, further comprising: receiving a pressure measurement from a pressure sensor positioned in the flow path for the flue gas from the power plant to the carbon capture system, the pressure measurement indicating a pressure level of the flue gas; determining whether the pressure level of the flue gas meets or exceeds a predefined threshold; and in response to determining that the pressure level of the flue gas is below the predefined threshold, transmitting a control signal to a discharge pressure regulator of the power plant, the control signal causing the discharge pressure regulator to increase the discharge pressure of the turbine of the power plant by an amount that increases the pressure level of the flue gas to at least the predefined threshold.

Yet another example of the present disclosure includes a system comprising one or more processors and one or more memories. The one or more memories include instructions that are executable by the one or more processors for causing the one or more processors to perform operations. The operations can include receiving a pressure measurement from a pressure sensor positioned in a flow path for a flue gas from a power plant to a carbon capture system, the pressure measurement indicating a pressure level of the flue gas. The operations can include determining whether the pressure level of the flue gas meets or exceeds a predefined threshold. The operations can include, in response to determining that the pressure level of the flue gas is below the predefined threshold, transmitting a control signal to a discharge pressure regulator of the power plant. The control signal causes the discharge pressure regulator to increase a discharge pressure of a turbine of the power plant by an amount that increases the pressure level of the flue gas to at least the predefined threshold.

One or more embodiments include the system of the previous paragraph, wherein the flow path excludes a blower.

One or more embodiments include the system of any previous paragraph, wherein the carbon capture plant includes an absorber, and wherein the flow path excludes the blower from between a combustor associated with the turbine and the absorber.

One or more embodiments include the system of any previous paragraph, wherein the predefined pressure is a minimum pressure level associated with using an absorber of the carbon capture plant.

### Brief Description of the Drawings

FIG. 1 is a block diagram of an example of a system that includes a power plant connected to a carbon capture plant that excludes a blower at an absorber inlet according to some aspects of the present disclosure.
FIG. 2 is a block diagram of an example of a carbon capture system that excludes a blower at an inlet of an absorber according to some aspects of the present disclosure.
FIG. 3 is a flowchart of an example of a process for configuring a carbon capture system without a blower at an inlet of an absorber according to some aspects of the present disclosure.
FIG. 4 is a block diagram of an example of a computer system usable to implement some aspects of the present disclosure.

### Detailed Description

Certain aspects and features of the present disclosure relate to a carbon capture system for removing carbon dioxide (CO₂) from post-combustion flue gas, where the carbon capture system excludes a blower that is normally positioned between an emitter of the flue gas and an absorber used to scrub the flue gas. For example, a power plant can include a gas turbine that is driven by the combustion of fossil fuels to generate electrical energy. A byproduct of such combustion can be flue gas that contains CO₂. To help reduce the amount of CO₂ in the flue gas, the power plant can be connected to a carbon capture system. Such carbon capture systems are normally configured with a blower positioned between a combustor associated with the gas turbine and the absorber. The blower can increase the pressure of the flue gas to a level that overcomes the pressure lost through the absorber and other flue gas path equipment of the carbon capture system. But such blowers can be expensive, large, and heavy. Such blowers can also require continued maintenance, raising reliability and availability concerns, and consume significant amounts of electrical power. To avoid these issues, some examples of the present disclosure can remove the blower from between the combustor and the absorber. This can decrease the cost, size, and power consumption of the carbon capture system.

Because the blower performs the important function of increasing the pressure level of the flue gas prior to the absorber, its absence may need to be accounted for so that the carbon capture system can properly operate. To account for the removal of the blower, in some examples a discharge pressure of the gas turbine can be increased. Increasing the discharge pressure of the gas turbine can increase the pressure level of the flue gas, so that the flue gas is at a suitable pressure level for use with the absorber and other downstream equipment of the carbon capture system.

While increasing the discharge pressure on the gas turbine can increase the pressure level of the flue gas, it can also decrease the power production of the gas turbine, thereby reducing its power output. But, this reduction in efficiency can be sufficiently offset by the removal of the blower. For example, if a blower consumes 6 MW of power, removal of the blower from the carbon capture system saves 6 MW of power. If the discharge pressure of the gas turbine is increased by 55 millibar to account for the removal of the blower, it may reduce the power output from the gas turbine by 4 MW. Because 6 MW of power is saved by removing the blower, and only 4 MW is lost by increasing the discharge pressure on the gas turbine, this approach can yield a net benefit of 2 MW of power savings that can be used to power other devices. Thus, if the power plant and carbon capture plant cooperate to implement the techniques described herein, they can produce a net energy benefit to the overall system (e.g., the combination of the carbon capture plant and the power plant) that neither party can achieve alone.

The techniques described herein can have the counterintuitive and surprising effect of increasing the overall energy efficiency of the system by intentionally reducing the efficiency of the power plant. Since power plant operators are generally resistant to intentionally reducing their power efficiency, such a solution has not been previously explored. Such a solution also had not been previously explored because it requires a degree of cooperation between power plants and carbon capture plants, which are often operated by different companies that have different objectives or have been designed at different points in time.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

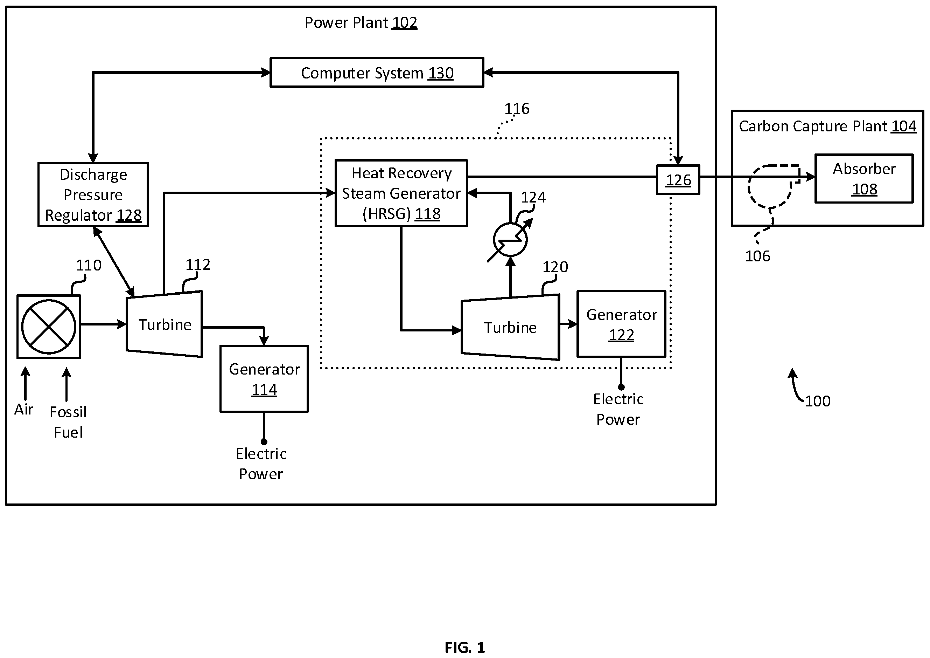

FIG. 1 is a block diagram of an example of a system 100 that includes a power plant 102 connected to a carbon capture plant 104, where the system 100 excludes a blower 106 at an inlet to an absorber 108 according to some aspects of the present disclosure. The power plant 102 is an industrial facility that includes the physical infrastructure for generating large-scale electrical power (e.g., for a power grid). The power plant 102 can include a configuration of equipment for converting fossil fuels into electrical power. For example, the power plant 102 can include a combustor 110 for combusting fossil fuels, such as gas or coal, to generate the flue gas. Although the combustor 110 is shown separately from the turbine 112, the combustor 110 may be part of the turbine 112 in some examples. The flue gas can drive the turbine 112 (e.g., a gas turbine), which can have blades that rotate as the flue gas passes through the blades. The blades are connected to a shaft, so the shaft can also rotate as the blades rotate. The shaft can be connected to an electric generator 114, which can convert the mechanical rotation of the shaft into electric power. The power plant 102 can also include other equipment, such as condensers and compressors, that are not shown in FIG. 1 for simplicity.

In some examples, the flue gas is transmitted to a carbon capture plant 104 for processing. The flue gas may be transmitted through other equipment 116 of the power plant 102 prior to reaching the carbon capture plant 104. For example, the flue gas may be transmitted through a pre-treatment scrubber prior to reaching the carbon capture plant 104. As another example, the flue gas can be transmitted through a heat recovery steam generator 118, which can be coupled to a secondary turbine 120, a secondary generator 122, and a condenser 124, among other components. These components may be arranged to extract additional energy from the flue gas and convert it to additional electric power. For instance, the HRSG 118 can recover heat from the flue gas and use the heat to produce steam, which can drive the secondary turbine 120 and the secondary generator 122 to generate the additional electric power.

At the carbon capture plant 104, the flue gas is processed to extract CO₂ and optionally other byproducts from the flue gas. This processing normally begins with the flue gas being transmitted through a blower 106. The blower 106 is normally positioned between the combustor 110 and the absorber 108, to increase the flue gas to a suitable pressure level for use with the absorber 108. But in some examples, the system 100 can exclude the blower 106. Removing the blower 106 can conserve power that is normally consumed by running the blower 106. In some cases, the blower 106 may consume several megawatts of energy (e.g., 6 MW), so removing the blower 106 can lead to significant power savings. Without the blower 106, the system 100 may not have any specialized equipment positioned between the combustor 110 and the absorber 108 that has the primary purpose of increasing the pressure level of the flue gas, though some of the other equipment 116 may affect the pressure level of the flue gas as a side effect of their operation.

To account for the removal of the blower 106, the discharge pressure (e.g., output pressure) of the turbine 112 may be adjusted, for example increased from a baseline level of 2 millibar. In some such examples, an operator of the power plant 102 can increase the discharge pressure of the turbine 112 to a value that is between 10 millibar and 100 millibar. Increasing the discharge pressure on the turbine 112 can reduce its efficiency and thus its power output, while also increasing the pressure level of the flue gas. Increasing the discharge pressure by a larger value may reduce the turbine's efficiency to a greater extent than increasing the discharge pressure by a smaller value, so the amount in which the discharge pressure is increased can be selected to balance the power reduction against the desired pressure level of the flue gas. In some examples, it can be desirable for the flue gas to have a pressure level of at least 50 millibar, which may be the minimum pressure level required for the flue gas to make it through the entire flue gas path, depending on the system configuration.

To increase the discharge pressure on the turbine 112, the power plant 102 can include a discharge pressure regulator 128. The discharge pressure regulator 128 can include one or more pressure control devices that can be operated to adjust the discharge pressure of the turbine 112. The discharge pressure regulator 128 may be manually controlled (e.g., by an operator of the power plant) or automatically controlled by a computer system 130.

In some examples, the system 100 can include a pressure sensor 126 that is configured to detect the pressure of the flue gas. The pressure sensor 126 can transmit pressure measurements to the computer system 130, which can automatically control the discharge pressure regulator 128 based on the pressure of the flue gas. For example, the computer system 130 can receive a pressure measurement and determine the pressure of the flue gas based on the pressure measurement. If the pressure level of the flue gas is below a threshold (e.g., a predefined pressure level associated with using the absorber 108), the computer system 130 can transmit a control signal to the discharge pressure regulator 128 to increase the discharge pressure of the turbine 112. The computer system 130 can implement this feedback loop, for example to iteratively adjust the discharge pressure of the turbine 112 until the pressure level of the flue gas meets or exceeds the threshold. This automation can help maintain the efficacy of the system 100.

In some examples, the turbine 112 may be selected because it has a sufficient discharge pressure to account for the removal of the blower. For instance, during development of the power plant 102 and carbon capture plant 104, the design team may select a turbine 112 that has a discharge pressure that is sufficient to cause the pressure of the flue gas to meet or exceed a threshold pressure level, which may be selected to offset a pressure drop caused by the removal of the blower. The turbine 112 can be selected from among a plurality of turbine options for its ability to offset the pressure drop.

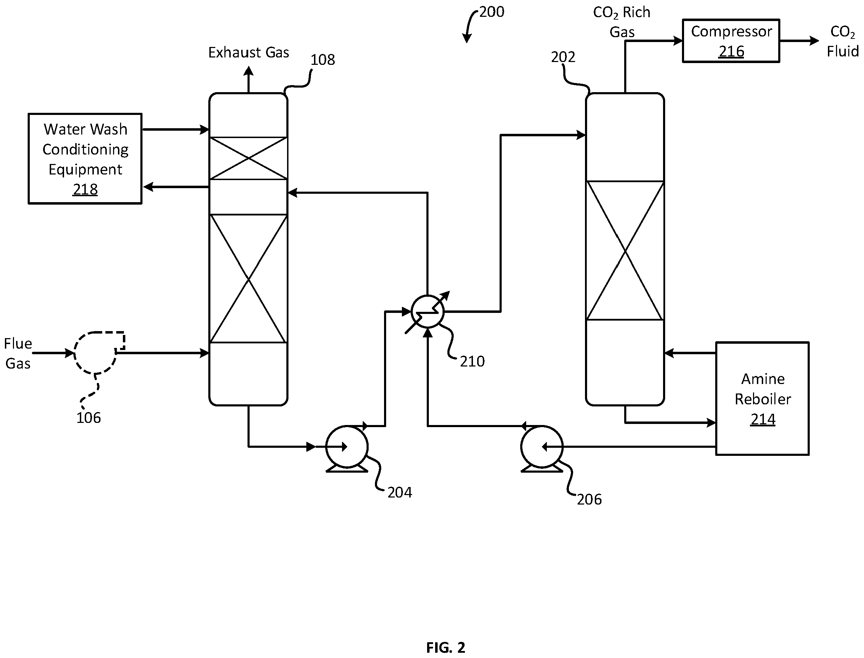

More details about the carbon capture plant 104 are shown in FIG. 2. Referring to FIG. 2, the carbon capture plant 104 includes a carbon capture system 200. The carbon capture system 200 includes an absorber 108 that can receive the flue gas from the power plant. When the flue gas enters the carbon capture system 200, it may be more than 3% CO₂ and in some cases more than 25% CO₂. After going through the carbon capture process, the flue gas may be less than 2% CO₂. In some examples, the carbon capture system 200 can exclude a blower 106 from the flow path (e.g., the one or more conduits) through which the flue gas travels from the power plant to the absorber 108.

In some examples, the carbon capture system 200 can include equipment in the flow path prior to the absorber 108. The equipment can interact with the flue gas before it reaches the absorber 108. For example, the carbon capture system 200 can include a direct contact cooler or other means of heat exchange in the flow path, prior to the inlet of the absorber 108. The direct contact cooler can reduce the temperature of the flue gas to a suitable level for use with the absorber 108 and may also act as a pre-scrubber for removal of contaminants and particulates.

In general, after receiving the flue gas at the inlet, the absorber 108 can transport the flue gas through a solution that contains amines. The CO₂ in the flue gas can bind with the amines to create carbon-reduced (e.g., carbon-free) flue gas. More specifically, the absorption process can make use of the reversable nature of the chemical reaction of an aqueous alkaline solvent, usually an amine, with an acid or sour gas. At the absorber 108, which can typically have temperatures of 40-60°C, the CO₂ is bound by the chemical amine solvent. The flue gas may then undergo a water wash section to balance water in the system and to remove any solvent droplets or solvent vapor carried over, before leaving the absorber. The carbon-reduced flue gas can be vented from the absorber 108 as exhaust gas. After binding to the CO₂, the amine solution can be transmitted to a stripper 202, at which point the amine solution can be heated or re-boiled with steam or another heat source. Again, making use of the reversable nature of the chemical reaction, the high temperatures in the stripper 202 can separate the CO₂ from the amine, thereby producing a CO₂ stream that is relatively pure. In some cases, the stripper 202 may apply heat of 100-140°C. The stripper 208 may have an internal pressure at or around that of atmospheric pressure. The resulting CO₂ stream may be referred to herein as a CO₂ rich gas. The amine solution can then be returned to the absorber 108 for reuse. The CO₂ rich gas can continue to a compressor 216, which can turn it into a liquid. The liquid can be piped or shipped to its final destination, for example to be sold or buried safely underground.

The carbon capture system 200 can include various pieces of equipment to effectuate the carbon capture process. Some examples of this equipment are shown in FIG. 2, though not all such equipment is shown for simplicity. As shown in FIG. 2, the carbon capture system 200 can include a first pump 204 to pump the amine-rich solution to the stripper 202, a second pump 206 to pump the amine-lean solution back to the absorber 108, and an exchanger 210 to facilitate this transfer of amine solution. The first pump 204 and the second pump 206 can be coupled to the exchanger 210, which in turn can be coupled to the absorber 108 and the stripper 202. Other components, such as a filter, may also be positioned between exchanger 210 and the absorber 108 to facilitate this process.

In some examples, the carbon capture system 200 may also include an amine reboiler 214 and water wash conditioning equipment 218. The amine reboiler 214 can provide heat to the stripper 208 to remove CO₂ from the amine solution, so that the amine solution can be reused in the absorber 108. The water wash conditioning equipment 218 can correspond to a water wash section of the absorber 108. The water wash section can be configured to water wash the flue gas after CO₂ absorption to reduce solvent emissions. The water wash conditioning equipment 218 can include a pump and a cooler (e.g., a heat exchanger), which can be connected together to perform these functions.

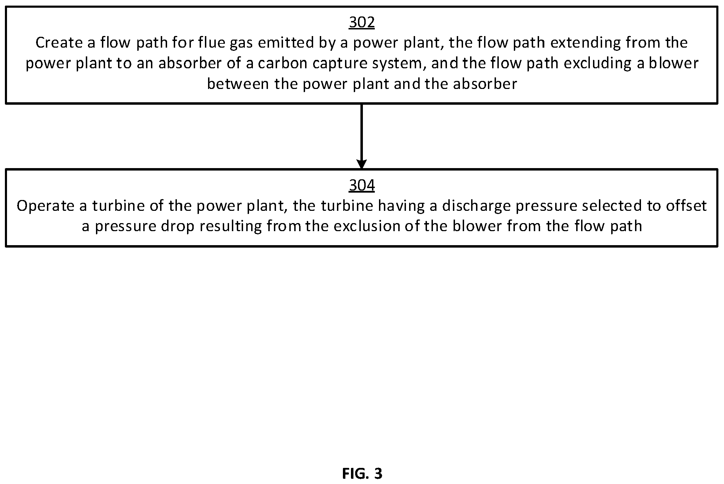

Referring now to FIG. 3, shown is a flowchart of an example of a process for configuring a carbon capture system 200 without a blower 106 at an inlet of an absorber 108 according to some aspects of the present disclosure. Other examples may include more operations, fewer operations, different operations, or a different sequence of operations than is shown in FIG. 3. The operations of FIG. 3 are described below with reference to the components of FIGS. 1-2 above.

In block 302, a flow path is created for flue gas emitted by a power plant 102. The flow path can be defined by one or more conduits, which can be connected together using any suitable technique, such as welding, press fitting, or fastening. The flow path can extend from the power plant 102 to an absorber 108 of a carbon capture system 200. For example, the flow path can extend from a turbine 112 of the power plant 102 to an inlet of the absorber 108. The carbon capture system 200 may be positioned within the power plant 102 or elsewhere, such as in a carbon capture plant 104 that is separate from the power plant 102.

The flow path can include one or more pieces of equipment, such as a heat recovery steam generator. This equipment may be in the power plant 102, the carbon capture plant 104, or both. Although the flow path can include some types of equipment, the flow path excludes a blower 106 as discussed above.

In block 304, a turbine 112 is operated. The turbine 112 can have a discharge pressure that is sufficient to offset a pressure drop resulting from the exclusion of the blower from the flow path. The turbine 112 may be selected at least partially because its discharge pressure is sufficiently high to overcome the pressure difference resulting from the removal of the blower. In this way, the turbine 112 can be configured to balance against the resistance to flow of the downstream elements of the carbon capture plant 104.

In some examples, the discharge pressure of the turbine 112 can be adjusted by an amount. The amount can be configured to increase a pressure of the flue gas to at least a predefined pressure level, which may be associated with the absorber 108 and other equipment of the carbon capture system 200. For example, the predefined pressure level may be a minimum pressure level or an optimal pressure level for using the absorber 108. The discharge pressure of the turbine 112 may be adjusted via a discharge pressure regulator 128, which can be controlled manually by a human operator or automatically by a computer system 130. The discharge pressure of the turbine 112 may be adjusted by an amount that offsets a lack of pressure due to the removal of the blower.

Though some examples are described above with respect to a power plant, similar principles can be applied to other kinds of emitters of flue gas. Thus, the present disclosure is not intended to be limited to flue gas from power plants.

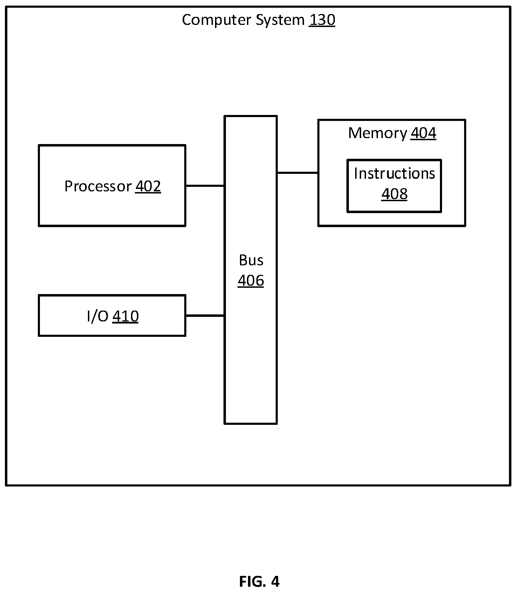

FIG. 4 is a block diagram of an example of a computer system 130 usable to implement some aspects of the present disclosure. The computer system 130 includes a processor 402 coupled to a memory 404 via a bus 406. The processor 402 can include one processing device or multiple processing devices. Non-limiting examples of the processor 402 include a Field-Programmable Gate Array (FPGA), an application-specific integrated circuit (ASIC), a microprocessor, or any combination of these. The processor 402 can execute instructions 408 stored in the memory 404 to perform operations. Examples of such operations can include any of the operations described above with respect to the computer system 130. In some examples, the instructions 408 can include processor-specific instructions generated by a compiler or an interpreter from code written in any suitable computer-programming language, such as C, C++, C#, Python, or Java.

The memory 404 can include one memory device or multiple memory devices. The memory 404 can be volatile or non-volatile, such that the memory 404 retains stored information when powered off. Non-limiting examples of the memory 604 include electrically erasable and programmable read-only memory (EEPROM), flash memory, or any other type of non-volatile memory. At least some of the memory device can include a non-transitory computer-readable medium from which the processor 402 can read instructions 408. A computer-readable medium can include electronic, optical, magnetic, or other storage devices capable of providing the processor 402 with computer-readable instructions or other program code. Non-limiting examples of a computer-readable medium can include magnetic disks, memory chips, ROM, random-access memory (RAM), an ASIC, a configured processor, optical storage, or any other medium from which a computer processor can read the instructions 408.

The computer system 130 may also include input and output (I/O) components 410. The input components can include a mouse, a keyboard, a microphone, a trackball, a touch pad, a touch-screen display, or any combination of these. The output components can include a visual display, an audio display, a haptic display, or any combination of these. Examples of a visual display can include a liquid crystal display (LCD), a light-emitting diode (LED) display, and a touch-screen display. An example of an audio display can include speakers. Examples of a haptic display may include a piezoelectric device or an eccentric rotating mass (ERM) device.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A carbon capture system comprising:
an absorber that receives flue gas from a power plant and applies an amine solution to the flue gas for removing carbon dioxide from the flue gas, wherein the carbon capture system excludes a blower from a flow path for the flue gas between the power plant and the absorber.

2. The carbon capture system of claim 1, wherein the flow path extends from a turbine of the power plant to an inlet of the absorber.

3. The carbon capture system of claim 2, wherein the turbine has a discharge pressure, the discharge pressure being usable to increase a pressure of the flue gas to at least a predefined pressure level associated with the absorber.

4. The carbon capture system of claim 3, wherein the power plant comprises:
a combustor that generates the flue gas by combusting a fossil fuel;
the turbine coupled to the combustor, wherein the turbine rotates a shaft in response to the flue gas; and
a generator coupled to the turbine, wherein the generator generates electric power in response to a rotation of the shaft of the turbine.

5. The carbon capture system of claim 2, wherein the flow path is defined by one or more conduits between a combustor associated with the turbine and the inlet of the absorber.

6. The carbon capture system of claim 2, wherein the turbine has a discharge pressure selected to offset a pressure drop resulting from an exclusion of the blower from the flow path; optionally, wherein the discharge pressure is a minimum pressure level associated with using the absorber.

7. The carbon capture system of claim 2, wherein the power plant comprises:
one or more processors; and
one or more memories including instructions that are executable by the one or more processors for causing the one or more processors to:
receive a pressure measurement from a pressure sensor positioned in the flow path for the flue gas from the power plant to the carbon capture system, the pressure measurement indicating a pressure level of the flue gas;
determine whether the pressure level of the flue gas meets or exceeds a predefined threshold; and
in response to determining that the pressure level of the flue gas is below the predefined threshold, transmit a control signal to a discharge pressure regulator of the power plant, the control signal causing the discharge pressure regulator to increase a discharge pressure of the turbine of the power plant by an amount that increases the pressure level of the flue gas to at least the predefined threshold; optionally, wherein the predefined threshold is a minimum pressure level associated with using the absorber.

8. A method comprising:
creating a flow path for flue gas emitted by a power plant, the flow path extending from the power plant to an absorber of a carbon capture system, wherein the absorber receives the flue gas and applies an amine solution to the flue gas for removing carbon dioxide from the flue gas, and wherein the flow path excludes a blower between the power plant and the absorber; and
operating a turbine of the power plant, the turbine having a discharge pressure selected to offset a pressure drop resulting from an exclusion of the blower from the flow path; optionally, wherein the flow path extends from a combustor of the power plant to an inlet of the absorber.

9. The method of claim 8, further comprising increasing the discharge pressure of the turbine by 50-70 kilo-pounds-per-inch (KPI) to offset the pressure drop.

10. The method of claim 8, wherein the power plant comprises:
a combustor that generates the flue gas by combusting a fossil fuel;
the turbine coupled to the combustor, wherein the turbine rotates a shaft in response to the flue gas; and
a generator coupled to the turbine, wherein the generator generates electric power in response to a rotation of the shaft of the turbine.

11. The method of claim 8, wherein the flow path is defined by one or more conduits between a combustor associated with the turbine and an inlet of the absorber.

12. The method of claim 8, wherein the discharge pressure is a minimum pressure level associated with using the absorber.

13. The method of claim 8, further comprising:
receiving a pressure measurement from a pressure sensor positioned in the flow path for the flue gas from the power plant to the carbon capture system, the pressure measurement indicating a pressure level of the flue gas;
determining whether the pressure level of the flue gas meets or exceeds a predefined threshold; and
in response to determining that the pressure level of the flue gas is below the predefined threshold, transmitting a control signal to a discharge pressure regulator of the power plant, the control signal causing the discharge pressure regulator to increase the discharge pressure of the turbine of the power plant by an amount that increases the pressure level of the flue gas to at least the predefined threshold.

14. A system comprising:
one or more processors; and
one or more memories including instructions that are executable by the one or more processors for causing the one or more processors to:
receive a pressure measurement from a pressure sensor positioned in a flow path for flue gas from a power plant to a carbon capture system, the pressure measurement indicating a pressure level of the flue gas;
determine whether the pressure level of the flue gas meets or exceeds a predefined threshold; and
in response to determining that the pressure level of the flue gas is below the predefined threshold, transmit a control signal to a discharge pressure regulator of the power plant, the control signal being configured to cause the discharge pressure regulator to increase a discharge pressure of a turbine of the power plant by an amount that increases the pressure level of the flue gas to at least the predefined threshold; optionally, wherein the predefined pressure is a minimum pressure level associated with using an absorber of the carbon capture plant.

15. The system of claim 14, wherein the flow path excludes a blower; optionally, wherein the carbon capture plant includes an absorber, and wherein the flow path excludes the blower from between a combustor associated with the turbine and the absorber.
